# EUROPEAN PATENT APPLICATION

(11) **EP 3 270 446 A1**
(43) Date of publication of application: **17.01.2018**
(21) Application number: 16761810.7
(22) Date of filing: 10.03.2016
(51) Int. Cl.: H01M 4/525, C01G 53/00

(54) **POSITIVE-ELECTRODE ACTIVE MATERIAL FOR NONAQUEOUS ELECTROLYTE LITHIUM SECONDARY BATTERIES, AND PRODUCTION METHOD FOR SAID MATERIAL**

(30) Priority: 10.03.2015 JP 2015046924
(71) Applicant: Nihonkagakusangyo Co. Ltd., Tokyo 110-0004 (JP)
(72) Inventor: KASHIMA, Hajime, Soka-shi Saitama 340-0005 (JP); SATO, Shinobu, Soka-shi Saitama 340-0005 (JP); MAKI, Fumihiko, Soka-shi Saitama 340-0005 (JP)
(74) Representative: TBK
(86) International application number: PCT/JP2016/057525
(87) International publication number: WO 2016/143844

(57) **Abstract**

To provide a positive electrode active material for lithium secondary batteries, which has excellent charge-discharge cycle characteristics and high capacity when used as a positive electrode material for secondary batteries, and to also provide a production method for the material. A nonaqueous electrolyte lithium secondary battery using a positive electrode active material comprising a Li-Ni-Co-Al composite oxide, wherein the initial discharge capacity when discharging at a measurement temperature of 20°C, a discharge rate of 0.1 C, and a voltage range of 4.25-2.5 V inclusive is 192 mAh/g or more, the discharge capacity hold rate when repeatedly charged and discharged 100 times under the same conditions is 94% or more, and the composite oxide particles have an aspect ratio equal to or greater than 0.9. An aqueous solution of a Ni compound and a Co compound is stirred in an N₂ gas atmosphere while adding alkali to generate Ni and Co coprecipitated hydroxides, which are then subjected to dehydration and drying and subsequently dry-blended with a Li compound and an Al compound, after which the resulting product is baked in an oxidizing atmosphere.

## Description

### FIELD OF TECHNOLOGY

The present invention relates to a positive electrode active material for non-aqueous electrolyte lithium secondary batteries comprising Li-Co-Ni-Al composite oxide and the production method thereof, particularly the positive electrode active material for large-capacity lithium secondary batteries having a long-life with superior charge-discharge cycle properties.

### BACKGROUND ART

The non-aqueous electrolyte lithium secondary batteries are used for a variety of applications such as mobile devices, e.g. laptop computers and cell phones and power sources for power tools. The applications for these batteries are expected to expand from the aspect of structuring low carbon societies and energy security, and the advancement of technology for these batteries are highly desired.

The demand in lithium secondary batteries as power sources of hybrid automobiles or electric bicycles (indicated collectively as EV hereinafter) has been rapidly expanded in recent years, and in order to use the lithium secondary batteries as power sources for EV, it is especially desired to have large capacity and long life. In view of this, the improvement in lithium secondary battery materials has been an urgent task. In the current situation where LiCoO₂ having cobalt (Co) as a main component as a positive electrode material among the materials constituting lithium secondary batteries has been widely used and the demand in the power sources for EV has been rapidly expanded, it is concerned that Co, which is a rare metal, might be depleted as a resource and the cost would be high.

As an alternative positive electrode active material for LiCoO₂, there are positive electrode active materials constituted of LiMn₂O₄ or Ni-Co-Mn ternary composite oxide having Mn as a main component. However, those materials have advantages and disadvantages in battery properties and are not fully meeting their requirements as the power sources for power tools and EV.

In the aforementioned situations, the lithium secondary batteries using LiₓNi_{y}Co_{1-y-z}Al_{z}O₂ having Ni which has large charge-discharge voltage and capacity as a main material have been studied. Conventionally, for high capacity and improvement for charge-discharge maintenance ratio, a variety of improvements for LiₓNi_{y}Co_{1-y-z}Al_{z}O₂ powders have been suggested, for example, the technology of enabling long operating life by improving conductivity by adhering oxides containing Zn and Al on the surface of the LiNiO₂ positive electrode active material (Patent Literature 1) and the technology that improves charge-discharge capacity of Li-Ni-Co-Al composite oxide and filling and preservative properties by lowering the change rate of the specific surface area before and after compression and the content of the sulfate ion (Patent Literature 2).

The LiₓNi_{y}Co_{1-y-z}Al_{z}O₂ positive electrode active materials disclosed in the Patent Literatures 1 and 2 are trying to obtain large capacity and long life by improving their electrical conductivities by producing a coating layer by a surface modifying agent in order to stabilize their crystal structures. However, they have not attained enough effects yet and the development of the positive electrode for the lithium secondary batteries having better battery properties than the conventional products has always been expected in the market.

### PRIOR ART LITERATURES

### PATENT LITERATURES

Patent Literature 1: Japanese Unexamined Patent Application Publication No. 2011-129258
Patent Literature 2: Japanese Unexamined Patent Application Publication No. 2008-166269

### SUMMARY OF THE INVENTION

### PROBLEMS TO BE SOLVED BY THE INVENTION

The objective of the present invention is to provide the above-mentioned positive electrode active material that can be a non-aqueous electrolyte lithium secondary battery having large capacity and superior charge-discharge maintenance ratio when used as a positive electrode in a lithium secondary battery, and the production method thereof.

### MEANS FOR SOLVING THE PROBLEM

The present inventors found out that, after exhaustive consideration for solving the above-mentioned objective, in order to obtain large capacity and long life, it is important to have high filling density of positive electrode active material and etc. In order to achieve this, the present inventors discovered that it is important to have:
(1) the positive electrode active material in particles close to spherical shape;
(2) moreover, all the particles have the uniform composition and shape; and
(3) furthermore, the aforementioned spherical shape particles are in a predetermined size not in extremely small fine particles and have high particle strength.

Next, after further exhaustive consideration with keeping the aforementioned findings in mind, in order to produce a positive electrode active material composed of Li-Co-Ni-Al composite oxide having the above-mentioned particle properties, it was discovered to be important that:
(11) in the secondary particle Ni-Co coprecipitation hydroxide production process, it needs to be produced under inert atmosphere, not under the oxidative atmosphere which results in miniaturization of the particles;
(12) not only the positive electrode active material strength can be further improved if the mixing of the aforementioned Ni-Co coprecipitation hydroxide particles, Li compound, and Al compound can be done in dry system, but also the cost for mixing process compared to the conventional wet system as well as that for calcining process after the mixing process can be significantly reduced; and
(13) it is important for the secondary particles to have the particle properties of the aforementioned (1)-(3) and to adjust the size of Li particles in order to conduct good mixing (getting Li particles in the gaps between the secondary particles evenly and uniformly) in dry system.

The present invention is based on the aforementioned findings and the positive electrode active material for non-aqueous electrolyte lithium secondary batteries of the present invention is (1) a non-aqueous electrolyte lithium secondary battery composed of Li-Ni-Co-Al composite oxide as a positive electrode, and is characterized in that the initial discharge capacity is 192 mAh/g or higher when discharged at the discharge rate of 0.1C at the measuring temperature of 20°C, (2) the discharge maintenance ratio after discharging the aforementioned non-aqueous electrolyte lithium secondary battery at the discharge rate of 1C at the measuring temperature of 20°C for 100 times can be 94% or higher, (3) the composition formula of the aforementioned composite oxide can be LiₓNi_{y}Co_{1-y-z}Al_{z}O₂ (where 0.9 ≤ x ≤ 1.1, 0.8 ≤ y ≤ 95, 0.00 ≤ z ≤ 0.05), and (4) the aforementioned composite oxide particles can have the aspect ratio ≥ 0.9.

Also, the production method of the aforementioned positive electrode active material for non-aqueous electrolyte lithium secondary battery of the present invention (5) is characterized in producing Ni and Co coprecipitation hydroxide by stirring the aqueous solution in which Ni compound and Co compound are dissolved under N₂ gas atmosphere while adding alkali, after dehydrating and drying the coprecipitation hydroxide, mixing Li compound and Al compound in dry system, then calcining the mixture under oxidation atmosphere. At this time, (6) the stirring of the aqueous solution of Ni compound and Co compound dissolved can be done at a speed at which N₂ gas is taken into the aqueous solution, (7) the Li compound particles that are mixed with Ni and Co coprecipitation hydroxide are 10 - 50 µm, and (8) the calcining can be done at 710 - 790°C for 5 - 20 hours.

### EFFECTS OF THE INVENTION

The positive electrode active material composed of Li-Ni-Co-Al composite oxide in the present invention achieved to make a lithium secondary battery having the initial discharge capacity of the battery of 192 mAh/g or higher, improved charge-discharge maintenance ratio, and large capacity/long life by being used for non-aqueous electrolyte lithium secondary battery.

Also, in the positive electrode active material of the present invention, since the ratio between the long axis and short axis in each positive electrode active material particle (the aspect ratio) is 0.9 or higher and the particle shape is close to spherical shape, the filling density of the positive electrode active material can be high when manufactured to be a positive electrode of the lithium secondary battery.

Further, in the producing method of the present invention, Ni and Co coprecipitation hydroxide particles (secondary particles) can be made to a shape close to spherical shape and to have high strength.

Moreover, the positive electrode active material having uniform composition and spherical shape can be obtained by synergic action of the aforementioned coprecipitation hydroxide and particle properties by adjusting the particle size of Li compound which is mixed with the coprecipitation hydroxide even in the dry system mixing.

### BRIEF DESCRIPTION OF THE DRAWINGS

Fig. 1 shows examples showing the charge-discharge curves of the lithium secondary batteries using the positive electrode active material of the present invention and the conventional (existing) positive electrode active material respectively.
Fig. 2 shows examples showing the cycle properties when the lithium secondary batteries using the positive electrode active material of the present invention and the conventional positive electrode active material respectively are repeatedly charged and discharged.
Figs. 3(A) and 3(B) are SEM (Scanning Electron microscope) photographs of Ni-Co coprecipitation hydroxide in the positive electrode active material obtained in an embodiment of the present invention.
Figs. 4(1)(A) to 4(6)B are SEM photographs of Ni-Co coprecipitation hydroxide in the positive electrode active material obtained in another embodiment of the present invention.
Figs. 5(A) and 5(B) are SEM photographs of Ni-Co coprecipitation hydroxide in the conventional positive electrode active material.
Figs. (A) and 6(B) are] SEM photographs of the positive electrode active material of the present invention.
Figs. 7(A) and 7(B) are SEM photographs of the conventional positive electrode active material.
Fig. 8 shows the conditions for the temperatures at calcining in the production method of the present invention and the conventional method.

### BEST MODES OF CARRYING OUT THE INVENTION

The positive electrode active material of the present invention is composed of Li-Co-Ni-Al composite oxide, preferably the Li-Co-Ni-Al composite oxide expressed by composition formula LiₓNi_{y}Co_{1-y-z}Al_{z}O₂ (where 0.9 ≤ x ≤ 1.1, 0.8 ≤ y ≤ 95, 0.00 ≤ z ≤ 0.05) and obtains non-aqueous electrolyte lithium secondary battery having specific battery properties (large capacity and long life) by using such Li-Co-Ni-Al composite oxide.

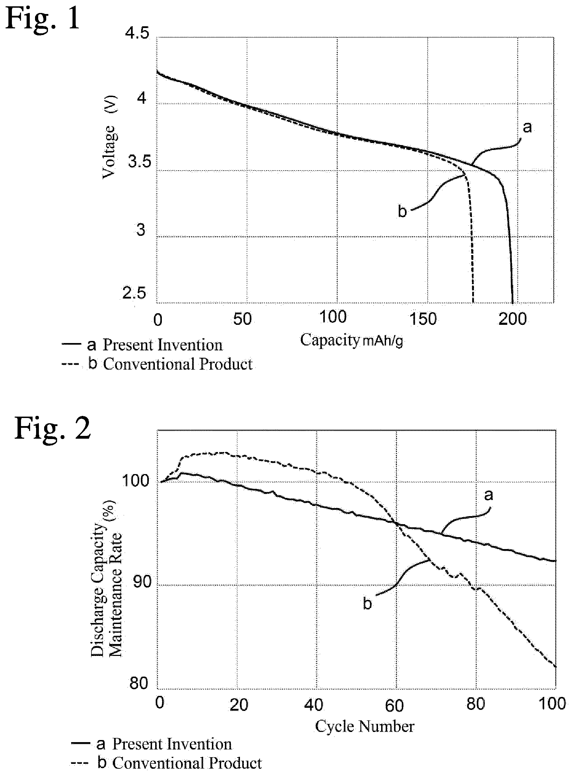

Fig. 1 shows the graph indicating examples of charge-discharge curves of the lithium secondary batteries using the positive electrode active material of the present invention and the conventional positive electrode active material respectively as a positive electrode at the discharge rate of 0.1C (C expresses C rate wherein 1C rate is the current value discharging the entire capacity of the battery in an hour) at the measuring temperature of 20°C.

In Fig. 1, the horizontal axis shows capacity (mAh/g) and the vertical axis shows voltage (V), curve a is in the case in which the positive electrode active material of the present invention was used and curve b is in the case in which the conventional positive electrode active material was used.

Each charge-discharge curve was measured in the range of voltage 4.25 - 2.5 V and a commercial item of the present inventors (also called as an existing item) was used for the aforementioned conventional positive electrode active material.

As seen from Fig. 1, the lithium secondary battery which used the conventional positive electrode active material as a positive electrode indicated in curve b has the initial discharge capacity of about 180 mAh/g while the lithium secondary battery which used the positive electrode active material of the present invention as a positive electrode indicated in curve a has the initial discharge capacity of about 200 mAh/g, showing that the lithium secondary battery having significantly larger discharge capacity compared to the one which used the conventional positive electrode material of curve b.

Fig. 2 is the graph showing the cycle properties of each lithium secondary battery having the charge-discharge properties shown in Fig. 1 when charged and discharged repeatedly at discharge rate 1C.

In Fig. 2, the horizontal axis shows the number of charge-discharge cycles and the vertical axis shows discharge capacity maintenance ratio, that is, the discharge capacity ratio (%) after the predetermined cycle numbers of charge-discharge to the discharge capacity at the first time (initial discharge), and curve a and curve b show the cycle properties of the lithium secondary batteries using the positive electrode active material of the present invention and the conventional positive electrode active material respectively as a positive electrode in the same manner as Fig. 1.

As shown in Fig. 2, the discharge capacity maintenance ratio after repeating charge-discharge for 100 times is about 80% in the lithium secondary battery using the conventional positive electrode active material in curve b while it is 94% or higher when the positive electrode active material of the present invention in curb a was used. Therefore, when the positive electrode active material of the present invention is used, the lithium secondary battery having good cycle property at charge-discharge and the significantly extended battery life can be provided.

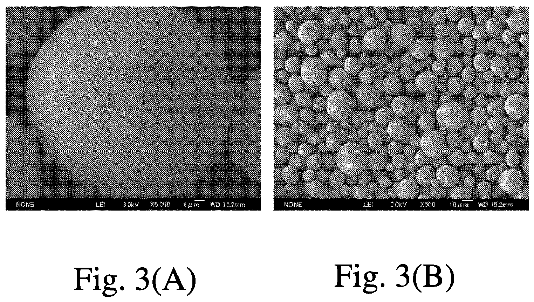

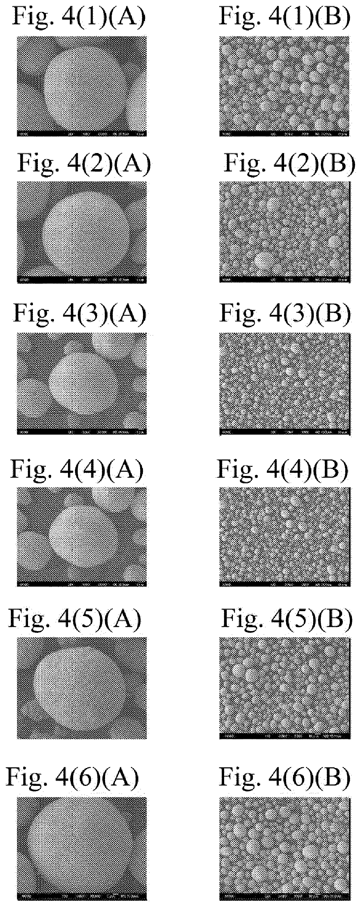

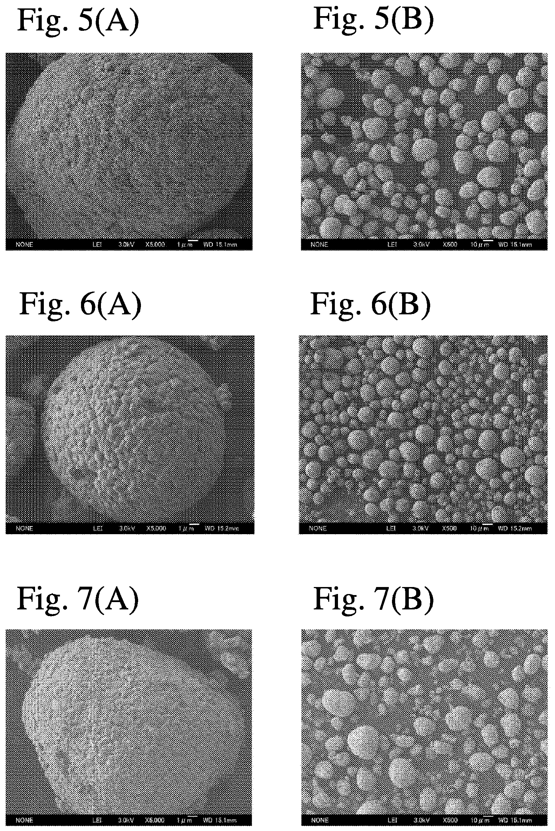

Figs. 3(A), 3(B), 4(1)(A)-4(6)(B), and 5(A), 5(B) show SEM photographs of the Ni-Co coprecipitation hydroxides (secondary particles) of the present invention (Figs. 3(A), 3(B) and 4(1)(A)-4(6)(B)) and the conventional secondary particles (Figs. 5(A), 5(B)) by the present inventor, respectively.

As it is clear from Figs. 3(A), (B), and Fig. 4(1)(A)-4(6)(B), all of the secondary particles of the present invention are in nearly spherical shape with the aspect ratio ≥ 0.9 and have very smooth surfaces while, it is clear from Figs. 5(A), (B), the conventional secondary particles have smaller aspect ratio compared to the secondary particles of the present invention, show deformed particle shape, and do not have the uniform shape among the particles, and the rough surfaces stand out.

Figs. 6(A), 6(B) and 7(A), 7(B) show SEM photographs of the positive electrode active material particles obtained by using the secondary particles of the present invention shown in Fig. 3 and the conventional secondary particles shown in Figs. 5(A), 5(B), respectively.

As seen from Figs. 6(A), 6(B), Figs. 7(A), 7(B), the particle properties of the positive electrode active material depend largely on the particle properties of the secondary particles of the coprecipitation hydroxide, the particles of the positive electrode active material that can be obtained by using the secondary particles of coprecipitation hydroxide of the present invention shown in Figs. 3(A), 3(B) are in nearly spherical shape as seen on Fig. 6(A) and uniform particle shape as seen on Fig. 6(B), and the surfaces are smooth (that is, it is considered that Li and Al particles are adhered to the gaps of the surface of the secondary particles evenly and uniformly, making the surface texture smooth) while the conventional positive electrode active material that can be obtained by using the conventional secondary particles shown in Figs. 5(A), 5(B) shows deformed particle shape as seen on Fig. 7(A) and hardly has uniform particle shape among all the particles as seen on Fig. 7(B), and the surface texture is not as smooth compared to the positive electrode active material of the present invention.

As well, as seen from the examples to be explained hereinafter, the positive electrode active material that can be obtained by using the secondary particles of the coprecipitation hydroxide of the present invention seen in Figs. 4(1)(A)-4(6)(B) shows the similar particle properties as Figs. 6(A), 6(B).

The positive electrode active material having smooth surface and nearly spherical shape shown on Figs. 6(A), 6(B) can be filled with large amount by the increased filling ratio in the battery, of course, compared to the particles having random, rough surfaces shown on Figs. 7(A), 7(B).

As a result, when the positive electrode active material of the present invention was used as a positive electrode of a secondary battery, it can obtain not only the secondary battery having high energy density per volume but also long life property by increasing the filling ratio when processed into a positive electrode.

The above-mentioned positive electrode active material is manufactured by obtaining Ni-Co coprecipitation hydroxide (secondary particles), mixing Al compound and Li compound therewith in dry system (inter-powder mixing), and calcining by the production method of the present invention.

In order to produce the secondary particles (Ni-Co coprecipitation hydroxide) of the present invention with the above-mentioned particle properties, aqueous solution having Ni compound and Co compound dissolved therein is prepared (Ni-Co aqueous solution hereinafter). For Ni and Co compounds, water soluble compounds such as sulfate, nitrate, or chloride of Ni and Co are used respectively. The ratio of Ni compound and Co compound is Ni:Co = about 95:5 - 75:25 by molar ratio, preferably 80:20 - 85:15.

The above-mentioned Ni-Co aqueous solution is added to a reaction tank, N₂ gas is passed through the reaction tank, and the aqueous solution is stirred while alkali is added into the Ni-Co aqueous solution.

At this time, in the reaction tank, the pressure is about atmospheric pressure, about 55 - 65°C, the ammonia concentration of about 11 - 13 g/L, and pH about 11 - 13, and the stirring is suitably done at the rate that N₂ gas in the tank is taken into the aqueous solution, for example, at the stirring vane tip speed of 1.8 - 5.5 m/s, preferably at 3.0 - 5.5 m/s when a reaction tank size is 50 liter (hereinafter liter is indicated as "L" and milliliter is indicated as "mL").

In the present invention, as a rough standard for such stirring conditions, the actual stirring conditions for which N₂ gas is taken into the aqueous solution can be set.

When the coprecipitation hydroxide of Ni and Co is generated under the condition for which N₂ gas is taken into the aqueous solution, the coprecipitation hydroxide would show the particle condition close to approximate spherical shape having the aspect ratio of 0.9 or higher.

When this coprecipitation hydroxide generation is done under the conventional condition for which air is taken into the aqueous solution, not N₂ gas, the particles will have random particle shape without becoming spherical shape due to the particle surface oxidation while the reasons are not necessarily clear.

As well, the reaction tank can be made such that the N₂ gas can be taken into the aqueous solution more easily by placing a baffle or center slate.

As well, for the alkali, NaOH or ammonia ion supply source (such as NH₄OH or (NH₄)₂SO₄) is used, particularly, the combined use of NaOH and (NH₄)₂SO₄ having superior handling properties is preferred as it is easy to obtain and micro-adjust.

By this way, the particulate Ni-Co coprecipitation hydroxide obtained by dehydrating and drying the slurry containing Ni-Co coprecipitation hydroxide generated in the reaction tank is supplied as a raw material for producing the positive electrode active material of the present invention. The slurry is dried at about 95 - 120°C after dehydration.

The particulate Ni-Co coprecipitation hydroxide after drying shows the shape close to nearly spherical shape having the aspect ratio of 0.9 or higher and smooth surface texture.

Next, the nearly spherical shape Ni-Co coprecipitation hydroxide (secondary particles) obtained by the above-mentioned process and Al compound and Li compound are mixed in dry system in the ratio stoichiometrically satisfying LiₓNi_{y}Co_{1-y-z}Al_{z}O₂ (where 0.9 ≤ x ≤ 1.1, 0.8 ≤ y ≤ 95, 0.00 ≤ z ≤ 0.05) and the raw material mixture (a precursor of the positive electrode active material of the present invention) is prepared.

As well, in this mixing, the general mixing apparatus, such as horizontal cylinder, V-shape, double-cone shape, or cubic shape mixing apparatus, can be used.

For the Al compound, Al compound that can be oxide at high temperature such as oxide, hydroxide, sulfate, and nitrate is used, and for the Li compound, Li compound that can be oxide at high temperature such as hydroxide, carbonate, and halide is used.

Particularly, by dry mixing, in order to make each raw material uniform that is, to make not only the shape of all particles but also the composition uniform, lithium hydroxide having an average particle diameter of about 10 - 50 µm, preferably about 25 - 35 µm, for the Li compound is suitably used. It is sufficient to use the commercially available Al compound having an average particle diameter of 10 µm or smaller. With these particle diameters, Al can be fully solid dispersed in the following calcining process and good reactivity can be obtained. Particularly, if aluminum oxide having extremely small average particle diameter is used, LiₓNi_{y}Co_{1-y-z}Al_{z}O₂ having excellent quality can be obtained.

For the mixing conditions at the dry mixing, it is desirable to mix under normal temperature, normal pressure, and closed condition (the raw material adding part on the powder mixing apparatus is closed, etc.) for about 0.5 - 1.5 hours.

The raw material mixture prepared in the way as mentioned above is calcined under an oxidizing atmosphere, 710 - 790°C, preferably 730 - 780°C, for 5 - 20 hours.

After calcining, it can be rapidly cooled outside the calcining furnace or gradually cooled inside the calcining furnace.

For the rising temperature conditions until it reaches the aforementioned temperature, it is not particularly limited, however, it rises in 5 - 15 hours from the beginning of temperature rising in the furnace, preferably in about 8 - 12 hours.

The present invention can make the speed of the temperature rising twice as much fast as it takes conventionally and keep calcining temperature low since the reactivity with each raw material mixed is improved.

Examples of temperature rising and calcining mode of the present invention and the conventional method are shown in Fig. 7. In Fig. 7, a indicates the embodiment of the method of the present invention and b indicates the embodiment of the conventional method.

### EXAMPLES

### [Synthesis ofNi-Co coprecipitation hydroxide (secondary particles)]

### Synthesis ofNi-Co coprecipitation hydroxide [1]:

Ni-Co aqueous solution was prepared in the Ni:Co molar ratio of NiSO₄ and CoSO₄ of 84:16 under room temperature.

On the other hand, pure water was placed in a SUS reaction tank (internal capacity 50L) with a lid and an overflow port and a stirring machine was operated at 60°C. While keeping these conditions, N₂ gas was introduced and the Ni-Co aqueous solution and (NH₄)₂SO₄ and NaOH aqueous solutions were dropped therein, and stirring had been continued at the stirring vane tip speed of 4.1 m/s.

During this stirring, it was confirmed that N₂ gas passed through the reaction tank was continuously taken into the aqueous solution.

Also, (NH₄)₂SO₄ was controlled to drop so that the ammonia concentration in the aqueous solution in the tank was 12.0 g/L and NaOH was controlled to drop so that pH of the aqueous solution in the tank was 12.0.

The precipitated material obtained was removed in a slurry condition, dehydrated, dried at 110°C for 16 hours, and Ni-Co coprecipitation hydroxide [1] was obtained.

The secondary particles [1] obtained were particles having nearly spherical shape having the aspect ratio of 0.9 or higher and had smooth surfaces as seen in Figs. 3(A), 3(B).

### Synthesis ofNi-Co coprecipitation hydroxide [11]:

(1) Except that the Ni:Co molar ratio of NiSO₄ and CoSO₄ was 80:20 and the Ni-Co aqueous solution obtained and (NH₄)₂SO₄ and NaOH aqueous solutions were stirred under N₂ gas being introduced at the stirring vane tip speed of 3.0 m/s, Ni-Co coprecipitation hydroxide [111] was obtained in the same manner as the above-mentioned Ni-Co coprecipitation hydroxide [1]. During this stirring, N₂ gas was continuously taken into the aqueous solution.
   The secondary particles obtained [111] were particles having nearly spherical shape having the aspect ratio of 0.9 or higher and had smooth surfaces as seen in Figs. 4 (1) (A), 4(1)(B).
(2) Except that the Ni:Co molar ratio of NiSO₄ and CoSO₄ was 80:20 and the Ni-Co aqueous solution obtained and (NH₄)₂SO₄ and NaOH aqueous solutions were stirred under N₂ gas being introduced at the stirring vane tip speed of 5.5 m/s, Ni-Co coprecipitation hydroxide [112] was obtained in the same manner as the above-mentioned Ni-Co coprecipitation hydroxide [1]. During this stirring, N₂ gas was continuously taken into the aqueous solution.

The secondary particles obtained [112] were particles having nearly spherical shape having the aspect ratio of 0.9 or higher and had smooth surfaces as seen on Figs. 4 (2) (A), 4(2)(B).

### Synthesis of Ni-Co coprecipitation hydroxide [12]:

(3) Except that the Ni:Co molar ratio of NiSO₄ and CoSO₄ was 95:5 and the Ni-Co aqueous solution obtained and (NH₄)₂SO₄ and NaOH aqueous solutions were stirred under N₂ gas being introduced at the stirring vane tip speed of 3.0 m/s, Ni-Co coprecipitation hydroxide [121] was obtained in the same manner as the above-mentioned Ni-Co coprecipitation hydroxide [1]. During this stirring, N₂ gas was continuously taken into the aqueous solution.
   The secondary particles obtained [121] were particles having nearly spherical shape having the aspect ratio of 0.9 or higher and had smooth surfaces as seen on Figs. 4 (3) (A), 4(3(B).
(4) Except that the Ni:Co molar ratio of NiSO₄ and CoSO₄ was 95:5 and the Ni-Co aqueous solution obtained and (NH₄)₂SO₄ and NaOH aqueous solutions were stirred under N₂ gas being introduced at the stirring vane tip speed of 5.5 m/s, Ni-Co coprecipitation hydroxide [122] was obtained in the same manner as the above-mentioned Ni-Co coprecipitation hydroxide [1]. During this stirring, N₂ gas was continuously taken into the aqueous solution.

The secondary particles obtained [122] were particles having nearly spherical shape having the aspect ratio of 0.9 or higher and had smooth surfaces as seen on Figs. 4 (4) (A), 4(4)(B).

### Synthesis of Ni-Co coprecipitation hydroxide [13]:

(5) Except that the Ni:Co molar ratio of NiSO₄ and CoSO₄ was 75:25 and the Ni-Co aqueous solution obtained and (NH₄)₂SO₄ and NaOH aqueous solutions were stirred under N₂ gas being introduced at the stirring vane tip speed of 3.0 m/s, Ni-Co coprecipitation hydroxide [131] was obtained in the same manner as the above-mentioned Ni-Co coprecipitation hydroxide [1]. During this stirring, N₂ gas was continuously taken into the aqueous solution.
   The secondary particles obtained [131] were particles having nearly spherical shape having the aspect ratio of 0.9 or higher and had smooth surfaces as seen on Figs. 4 (5) (A), 4(5)(B).
(6) Except that the Ni:Co molar ratio of NiSO₄ and CoSO₄ was 75:25 and the Ni-Co aqueous solution obtained and (NH₄)₂SO₄ and NaOH aqueous solutions were stirred under N₂ gas being introduced at the stirring vane tip speed of 5.5 m/s, Ni-Co coprecipitation hydroxide [132] was obtained in the same manner as the above-mentioned Ni-Co coprecipitation hydroxide [1]. During this stirring, N₂ gas was continuously taken into the aqueous solution.

The secondary particles obtained [132] were particles having nearly spherical shape having the aspect ratio of 0.9 or higher and had smooth surfaces as seen on Figs. 4 (6) (A), 4(6) (B).

### Synthesis of Ni-Co coprecipitation hydroxide [2]:

At the production of the above-mentioned Ni-Co coprecipitation hydroxide [1], except that NiSO₄ and CoSO₄ aqueous solutions in the reaction tank were stirred at the stirring vane tip speed of 2.7 m/s, Ni-Co coprecipitation hydroxide [2] was obtained in the same manner as the above-mentioned Ni-Co coprecipitation hydroxide [1].

During this stirring, the amount of N₂ gas passing through the reaction tank was very small compared to the stirring in the above [1], however, it was confirmed that the N₂ gas was slightly taken into (about 40 - 60% of the above [1], about 50% on average, of the bubble generation due to the N₂ gas being taken into by the baffle effect in the reaction tank was confirmed).

The secondary particles obtained [2] showed particle shape condition close to Figs. 5(A), 5(B), intermediate between Figs. 3(A), 3(B) and Figs. 5(A), 5(B).

### Synthesis of Ni-Co coprecipitation hydroxide [3]:

At the production of the above-mentioned Ni-Co coprecipitation hydroxide [1], except that N₂ gas was not introduced into the reaction tank and stirring was continued in the air, Ni-Co coprecipitation hydroxide [3] was obtained in the same manner as the above-mentioned Ni-Co coprecipitation hydroxide [1].

The secondary particles obtained [3] showed particle shape condition having deformation and rough surfaces and all the particles had non-uniform shape as seen on Figs. 5(A), 5(B).

### [Example 1]

Each raw powder material of 950 g (molar ratio 0.97) of the Ci-Co coprecipitation hydroxide [1], 16.0 g (molar ratio 0.03) of alumina (average particle diameter: 10 µm), and 445 g (molar ratio 1.03) of lithium hydroxide (average particle diameter: 30 µm) were dry mixed with a ribbon blender for 1 hour.

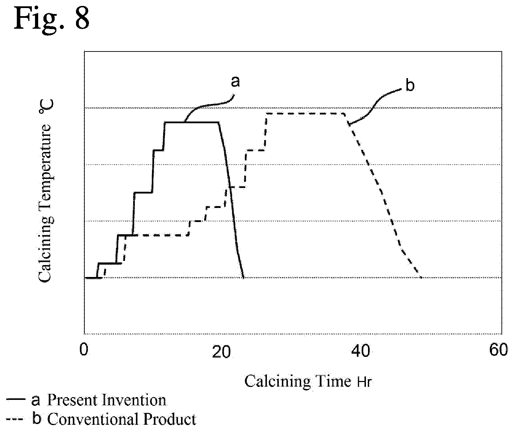

After mixing, it was calcined under oxidation atmosphere at 750°C for 20 hours including the time for rising temperature, and after calcining, it was removed from the furnace when the temperature inside the furnace reached 200°C, then cooled to room temperature. The conditions for the temperatures at calcining was shown on Fig. 8, a.

In this way, the positive electrode active material [1] having the composition formula of Li_{1.03}Ni_{0.82}Co_{0.15}Al_{0.03}O₂, the molar ratio (the ratio of gram atom number of each element) of Ni:Co:Al is 82:5:3, was obtained.

The shape of the positive electrode active material [1] obtained is nearly spherical shape having the aspect ratio of 0.9 or higher as seen on Figs. 6(A), 6(B).

Next, except that the positive electrode active material [1] was used, lithium secondary battery [1] was manufactured in a conventional way and charge-discharge was repeated for 100 times at the measurement temperature of 20°C, the voltage range in 4.25 - 2.5 V, and the voltage rate 1C.

The initial capacity (discharge capacity) and the discharge capacity maintenance rate (the rate of discharge capacity after discharged for 100 times to the discharge capacity at the initial discharge) are shown on Table 1.

### [Example 2]

Except that the Ni-Co coprecipitation hydroxide [2] was used, the positive electrode active material [2] was manufactured in the same way as the positive electrode active material of Example 1.

The positive electrode active material [2] obtained showed particle shape close to those shown on Figs. 7(A), 7(B), which is intermediate between those shown on Figs. 6(A), 6(B) and Figs. 7(A), 7(B).

Except that this positive electrode active material [2] was used as a positive electrode, lithium secondary battery [2] was manufactured in the same way as Example 1.

For the lithium secondary battery [2] obtained, the initial capacity and discharge capacity maintenance rate were calculated like Example 1 and the results are shown in Table 1.

### [Example 3]

Except that the Ni-Co coprecipitation hydroxide [3] was used, the positive electrode active material [3] was manufactured in the same way as the positive electrode active material of Example 1.

The positive electrode active material [3] obtained showed particle shape close to those shown on Figs. 7(A), 7(B).

Except that this positive electrode active material was used, lithium secondary battery [3] was manufactured in the same way as Example 1.

For the lithium secondary battery [3] obtained, the initial capacity and discharge capacity maintenance rate were calculated like Example 1 and the results are shown in Table 1.

### [Comparable Example 1]

The above-mentioned 950 g (molar ratio 0.97) of the Ni-Co coprecipitation hydroxide [1], 27.0 g (molar ratio 0.05) of alumina having average particle diameter of 10 µm, and 445 g (molar ratio 1.03) of lithium hydroxide having average particle diameter of 30 µm were wet mixed like a conventional way (a pressure tight container was used and after dissolving in water, stirred and wet mixed after reducing the pressure to 10.7KPa), dehydrated, and dried.

Next, except that calcining at 790°C for 48 hours including the time for rising temperature, the positive electrode active material [4] was manufactured in the same way as Example 1.

The positive electrode active material [4] obtained showed the particle shape shown on Figs. 7(A), 7(B).

Except that this positive electrode active material [4] was used, lithium secondary battery [4] was manufactured in the same way as Example 1.

For the lithium secondary battery [4] obtained, the initial capacity and discharge capacity maintenance rate were calculated like Example 1 and the results are shown in Table 1.

### [Comparable Example 2]

Except that using the Ni-Co coprecipitation hydroxide [1] and calcining at 790°C, the positive electrode active material [5] was manufactured in the same way as Example 1.

Except that this positive electrode active material was used, lithium secondary battery [5] of Comparable Example 3 was manufactured in the same way as Example 1.

For the lithium secondary battery [5] obtained, the initial capacity and discharge capacity maintenance rate were calculated like Example 1 and the results are shown in Table 1.

### [Comparable Example 3]

Except that using the Ni-Co coprecipitation hydroxide [1] and calcining at 710°C, the positive electrode active material [6] was manufactured in the same way as Example 1.

Except that this positive electrode active material [6] was used, lithium secondary battery [6] of Comparable Example 4 was manufactured in the same way as Example 1.

For the lithium secondary battery [6] obtained, the initial capacity and discharge capacity maintenance rate were calculated like Example 1 and the results are shown in Table 1.

**[Table 1]**

| Examples (Comparable Examples) | Initial Capacity (mAh/g) | | Discharge Capacity Maintenance Rate (%) |
|---|---|---|---|
| Example 1 | 220 | 197 | 94 |
| Example 2 | 221 | 196 | 91 |
| Example 3 | 219 | 192 | 91 |
| Comparable Example 1 | 213 | 178 | 82 |
| Comparable Example 2 | 221 | 194 | 74 |
| Comparable Example 3 | 219 | 185 | 94 |

### [Example 4]

Except that the Ni-Co coprecipitation hydroxide [1] was used and lithium hydroxide having average particle diameter of 10 µm was used, the positive electrode active material [1-1] was manufactured in the same way as the positive electrode active material of Example 1.

The positive electrode active material [1-1] obtained had the same composition formula and molar ratio ofNi:Co:Al as Example 1.

The shape of the positive electrode active material [1-1] obtained was nearly spherical having the aspect ratio of 0.9 or higher as shown on Figs. 6(A), 6(B).

Except that this positive electrode active material [1-1] was used as a positive electrode, lithium secondary battery [1-1] was manufactured in the same way as Example 1 and the initial capacity and discharge capacity maintenance rate were calculated like Example 1 and the results are shown in Table 2.

### [Example 5]

Except that the Ni-Co coprecipitation hydroxide [1] was used, lithium hydroxide having average particle diameter of 10 µm was used, and the calcining temperature was 710°C, the positive electrode active material [1-2] was manufactured in the same way as the positive electrode active material of Example 1.

The positive electrode active material [1-2] had the same composition formula and molar ratio ofNi:Co:Al as Example 1.

The shape of the positive electrode active material [1-2] obtained was nearly spherical having the aspect ratio of 0.9 or higher as shown on Figs. 6(A), 6(B).

Except that this positive electrode active material [1-2] was used as a positive electrode, lithium secondary battery [1-2] was manufactured in the same way as Example 1 and the initial capacity and discharge capacity maintenance rate were calculated like Example 1 and the results are shown in Table 2.

### [Example 6]

Except that the Ni-Co coprecipitation hydroxide [1] was used, lithium hydroxide having average particle diameter of 10 µm was used, the calcining temperature was 790°C, and the calcining time was for 5 hours including the time for rising temperature, the positive electrode active material [1-3] was manufactured in the same way as the positive electrode active material of Example 1.

The positive electrode active material [1-3] obtained had the same composition formula and molar ratio ofNi:Co:Al as Example 1.

The shape of the positive electrode active material [1-3] obtained was nearly spherical having the aspect ratio of 0.9 or higher as shown on Figs. 6(A), 6(B).

Except that this positive electrode active material [1-3] was used as a positive electrode, lithium secondary battery [1-3] was manufactured in the same way as Example 1 and the initial capacity and discharge capacity maintenance rate were calculated like Example 1 and the results are shown in Table 2.

### [Example 7]

Except that the Ni-Co coprecipitation hydroxide [1] was used and lithium hydroxide having average particle diameter of 25 µm was used, the positive electrode active material [1-3] was manufactured in the same way as the positive electrode active material of Example 1.

The positive electrode active material [1-3] obtained had the same composition formula and molar ratio ofNi:Co:Al as Example 1.

The shape of the positive electrode active material [1-3] obtained was nearly spherical having the aspect ratio of 0.9 or higher as shown on Figs. 6(A), 6(B).

Except that this positive electrode active material [1-3] was used as a positive electrode, lithium secondary battery [1-3] was manufactured in the same way as Example 1 and the initial capacity and discharge capacity maintenance rate were calculated like Example 1 and the results are shown in Table 2.

### [Example 8]

Except that the Ni-Co coprecipitation hydroxide [1] was used and lithium hydroxide having average particle diameter of 35 µm was used, the positive electrode active material [1-4] was manufactured in the same way as the positive electrode active material of Example 1.

The positive electrode active material [1-4] obtained had the same composition formula and molar ratio ofNi:Co:Al as Example 1.

The shape of the positive electrode active material [1-4] obtained was nearly spherical having the aspect ratio of 0.9 or higher as shown on Figs. 6(A), 6(B).

Except that this positive electrode active material [1-4] was used as a positive electrode, lithium secondary battery [1-4] was manufactured in the same as Example 1 and the initial capacity and discharge capacity maintenance rate were calculated like Example 1 and the results are shown in Table 2.

### [Example 9]

Except that the Ni-Co coprecipitation hydroxide [1] was used and lithium hydroxide having average particle diameter of 50 µm was used, the positive electrode active material [1-5] was manufactured in the same way as the positive electrode active material of Example 1.

The positive electrode active material [1-5] obtained had the same composition formula and molar ratio ofNi:Co:Al as Example 1.

The shape of the positive electrode active material [1-5] obtained was nearly spherical having the aspect ratio of 0.9 or higher as shown on Figs. 6(A), 6(B).

Except that this positive electrode active material [1-5] was used as a positive electrode, lithium secondary battery [1-5] was manufactured in the same way as Example 1 and the initial capacity and discharge capacity maintenance rate were calculated like Example 1 and the results are shown in Table 2.

### [Example 10]

Except that the Ni-Co coprecipitation hydroxide [1] was used, lithium hydroxide having average particle diameter of 50 µm was used, and the calcining temperature was 710°C, the positive electrode active material [1-6] was manufactured in the same way as the positive electrode active material of Example 1.

The positive electrode active material [1-6] had the same composition formula and molar ratio ofNi:Co:Al as Example 1.

The shape of the positive electrode active material [1-6] obtained was nearly spherical having the aspect ratio of 0.9 or higher as shown on Figs. 6(A), 6(B).

Except that this positive electrode active material [1-6] was used as a positive electrode, lithium secondary battery [1-6] was manufactured in the same way as Example 1 and the initial capacity and discharge capacity maintenance rate were calculated like Example 1 and the results are shown in Table 2.

### [Example 11]

Except that the Ni-Co coprecipitation hydroxide [1] was used, lithium hydroxide having average particle diameter of 50 µm was used, the calcining temperature was 790°C, and the calcining time was for 5 hours including the time for rising temperature, the positive electrode active material [1-7] was manufactured in the same way as the positive electrode active material of Example 1.

The positive electrode active material [1-7] had the same composition formula and molar ratio ofNi:Co:Al as Example 1.

The shape of the positive electrode active material [1-7] obtained was nearly spherical having the aspect ratio of 0.9 or higher as shown on Figs. 6(A), 6(B).

Except that this positive electrode active material [1-7] was used as a positive electrode, lithium secondary battery [1-7] was manufactured in the same way as Example 1 and the initial capacity and discharge capacity maintenance rate were calculated like Example 1 and the results are shown in Table 2.

### [Example 12]

Except that the above-mentioned 950 g (molar ratio 0.97) of the Ni-Co coprecipitation hydroxide [1], 16.0 g (molar ratio 0.03) of alumina (average particle diameter: 10 µm), and 398 g (molar ratio 0.91) of lithium hydroxide (average particle diameter: 30 µm) were used, the positive electrode active material [1-8] was manufactured in the same way as the positive electrode active material of Example 1.

The positive electrode active material [1-8] obtained had the composition formula Li_{0.91}Ni_{0.82}Co_{0.15}Al_{0.03}O₂ and the molar ratio ofNi:Co:Al is 82:15:3.

The shape of the positive electrode active material [1-8] obtained was nearly spherical having the aspect ratio of 0.9 or higher as shown on Figs. 6(A), 6(B).

Except that this positive electrode active material [1-8] was used as a positive electrode, lithium secondary battery [1-8] was manufactured in the same way as Example 1 and the initial capacity and discharge capacity maintenance rate were calculated like Example 1 and the results are shown in Table 2.

### [Example 13]

Except that the above-mentioned 950 g (molar ratio 0.97) of the Ni-Co coprecipitation hydroxide [1], 16.0 g (molar ratio 0.03) of alumina (average particle diameter: 10 µm), and 438 g (molar ratio 1.00) of lithium hydroxide (average particle diameter: 30 µm) were used, the positive electrode active material [1-9] was manufactured in the same way as the positive electrode active material of Example 1.

The positive electrode active material [1-9] obtained had the composition formula Li_{1.00}Ni_{0.82}Co_{0.15}Al_{0.03}O₂ and the molar ratio ofNi:Co:Al is 82:15:3.

The shape of the positive electrode active material [1-9] obtained was nearly spherical having the aspect ratio of 0.9 or higher as shown on Figs. 6(A), 6(B).

Except that this positive electrode active material [1-9] was used as a positive electrode, lithium secondary battery [1-9] was manufactured in the same way as Example 1 and the initial capacity and discharge capacity maintenance rate were calculated like Example 1 and the results are shown in Table 2.

### [Example 14]

Except that the Ni-Co coprecipitation hydroxide [121] was used and lithium hydroxide having average particle diameter of 30 µm was used, the positive electrode active material [121-1] was manufactured in the same way as the positive electrode active material of Example 1.

The positive electrode active material [121-1] obtained had the composition formula Li_{1.03}Ni_{0.92}Co_{0.05}Al_{0.03}O₂ and the molar ratio ofNi:Co:Al is 92:5:3.

The shape of the positive electrode active material [121-1] obtained was nearly spherical having the aspect ratio of 0.9 or higher as shown on Figs. 6(A), 6(B).

Except that this positive electrode active material [121-1] was used as a positive electrode, lithium secondary battery [121-1] was manufactured in the same way as Example 1 and the initial capacity and discharge capacity maintenance rate were calculated like Example 1 and the results are shown in Table 2.

### [Example 15]

Except that the Ni-Co coprecipitation hydroxide [122] was used and lithium hydroxide having average particle diameter of 30 µm was used, the positive electrode active material [122-1] was manufactured in the same way as the positive electrode active material of Example 1.

The positive electrode active material [122-1] obtained had the composition formula Li_{1.03}Ni_{0.92}Co_{0.05}Al_{0.03}O₂ and the molar ratio ofNi:Co:Al is 92:5:3.

The shape of the positive electrode active material [122-1] obtained was nearly spherical having the aspect ratio of 0.9 or higher as shown on Figs. 6(A), 6(B).

Except that this positive electrode active material [122-1] was used as a positive electrode, lithium secondary battery [122-1] was manufactured in the same way as Example 1 and the initial capacity and discharge capacity maintenance rate were calculated like Example 1 and the results are shown in Table 2.

### [Example 16]

Except that the above-mentioned 950 g (molar ratio 0.99) of the Ni-Co coprecipitation hydroxide [1], 5.2 g (molar ratio 0.01) of alumina (average particle diameter: 10 µm), and 390 g (molar ratio 0.91) of lithium hydroxide (average particle diameter: 30 µm) were used, the positive electrode active material [1-10] was manufactured in the same way as the positive electrode active material of Example 1.

The positive electrode active material [1-10] obtained had the composition formula Li_{0.91}Ni_{0.83}Co_{0.16}Al_{0.01}O₂ and the molar ratio ofNi:Co:Al is 83:16:1.

The shape of the positive electrode active material [1-10] obtained was nearly spherical having the aspect ratio of 0.9 or higher as shown on Figs. 6(A), 6(B).

Except that this positive electrode active material [1-10] was used as a positive electrode, lithium secondary battery [1-10] was manufactured in the same way as Example 1 and the initial capacity and discharge capacity maintenance rate were calculated like Example 1 and the results are shown in Table 2.

### [Example 17]

Except that the above-mentioned 950 g (molar ratio 0.95) of the Ni-Co coprecipitation hydroxide [1], 27.3 g (molar ratio 0.05) of alumina (average particle diameter: 10 µm), and 460 g (molar ratio 1.03) of lithium hydroxide (average particle diameter: 30 µm) were used, the positive electrode active material [1-11] was manufactured in the same way as the positive electrode active material of Example 1.

The positive electrode active material [1-11] obtained had the composition formula Li_{1.03}Ni_{0.80}Co_{0.15}Al_{0.05}O₂ and the molar ratio ofNi:Co:Al is 80:15:5.

The shape of the positive electrode active material [1-11] obtained was nearly spherical having the aspect ratio of 0.9 or higher as shown on Figs. 6(A), 6(B).

Except that this positive electrode active material [1-11] was used as a positive electrode, lithium secondary battery [1-11] was manufactured in the same way as Example 1 and the initial capacity and discharge capacity maintenance rate were calculated like Example 1 and the results are shown in Table 2.

**[Table 2]**

| Examples | Initial Capacity (mAh/g) | | Discharge Capacity Maintenance Rate (%) |
|---|---|---|---|
| | Charge | Discharge | |
| 4 | 226 | 200 | 95 |
| 5 | 220 | 193 | 93 |
| 6 | 219 | 193 | 92 |
| 7 | 221 | 195 | 97 |
| 8 | 224 | 197 | 98 |
| 9 | 220 | 192 | 85 |
| 10 | 218 | 192 | 84 |
| 11 | 218 | 192 | 81 |
| 12 | 220 | 195 | 98 |
| 13 | 219 | 195 | 96 |
| 14 | 225 | 202 | 94 |
| 15 | 229 | 210 | 94 |
| 16 | 219 | 194 | 94 |
| 17 | 219 | 194 | 94 |

### INDUSTRIAL APPLICABILITY

The positive electrode active material of the present invention is able to obtain the lithium secondary battery having high charge-discharge capacity and long life compared to the conventional lithium secondary battery by using it as a positive electrode of the lithium secondary battery.

Therefore, according to the positive electrode active material of the present invention, it can be used for already-known purposes such as battery source of EV requiring high capacity all the time, battery sources for personal computers and cell phones, and backup battery sources.

## Claims

1. A positive electrode active material for a non-aqueous electrolyte lithium secondary battery, comprising:
the positive electrode active material comprising an Li-Ni-Co-Al composite hydroxide,
wherein an initial discharge capacity of a non-aqueous electrolyte lithium secondary battery using the positive electrode active material is 192 mAh/g or higher when discharged at a voltage range of 4.25 - 2.5 V, a discharge rate of 0.1C, and a measurement temperature of 20°C.

2. The positive electrode active material for a non-aqueous electrolyte lithium secondary battery according to claim 1, wherein a discharge maintenance ratio of the non-aqueous electrolyte lithium secondary battery is 94% or higher when charge-discharge was repeated for 100 times at the discharge rate of 1C and the measuring temperature of 20°C.

3. The positive electrode active material for a non-aqueous electrolyte lithium secondary battery according to claim 1 or 2, wherein a composition formula of the composite hydroxide is LiₓNi_{y}Co_{1-y-z}Al_{z}O₂ (where 0.9 ≤ x ≤ 1.1, 0.8 ≤ y ≤ 95, 0.00 ≤ z ≤ 0.05).

4. The positive electrode active material for a non-aqueous electrolyte lithium secondary battery according to any of claims 1 to 3, wherein composite hydroxide particles have an aspect ratio ≥ 0.9.

5. A method of producing the positive electrode active material for a non-aqueous electrolyte lithium secondary battery according to any of claims 1 to 4, comprising:
producing nickel and cobalt coprecipitation hydroxide by stirring an aqueous solution of nickel compound and cobalt compound under nitrogen gas atmosphere while adding alkali;
after dehydrating and drying the coprecipitation hydroxide, mixing the coprecipitation hydroxide, lithium compound, and aluminum compound in dry system; and
calcining the mixture under oxidation atmosphere.

6. The method according to claim 5, wherein the aqueous solution of nickel compound and cobalt compound is stirred at a speed at which the nitrogen gas is taken into the aqueous solution.

7. The method according to claim 5 or 6, wherein particles of the lithium compound are 10 - 50 µm.

8. The method according to any of claims 5 to 7, wherein the calcining is conducted at 710 - 790 °C for 5 - 20 hours.
